(19) Europäisches Patentamt
European Patent Office
Office européen des brevets

(11) **EP 2 098 088 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(21) Anmeldenummer: **07819172.3**

(22) Anmeldetag: **19.10.2007**

(51) Int Cl.:
*G01S 5/02* (2010.01)   *H04W 64/00* (2009.01)

(86) Internationale Anmeldenummer:
**PCT/EP2007/009107**

(87) Internationale Veröffentlichungsnummer:
**WO 2008/064745 (05.06.2008 Gazette 2008/23)**

(54) **VERFAHREN UND VORRICHTUNG ZUR BESTIMMUNG DER POSITION EINES ENDGERÄTS IN EINEM MOBILFUNKNETZ**

METHOD AND DEVICE FOR DETERMINATION OF THE POSITION OF A TERMINAL IN A MOBILE COMMUNICATION NETWORK

PROCÉDÉ ET DISPOSITIF POUR DÉTERMINER LA POSITION D'UN TERMINAL DANS UN RÉSEAU DE TÉLÉCOMMUNICATION MOBILE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.11.2006 DE 102006056338**

(43) Veröffentlichungstag der Anmeldung:
**09.09.2009 Patentblatt 2009/37**

(73) Patentinhaber: **Rohde & Schwarz GmbH & Co. KG 81671 München (DE)**

(72) Erfinder:
• **GESSNER, Christina**
  **81673 München (DE)**
• **PABST, Alexander**
  **82024 Taufkirchen (DE)**
• **MOHR, Karsten**
  **81539 München (DE)**

(74) Vertreter: **Körfer, Thomas**
  **Mitscherlich PartmbB**
  **Patent- und Rechtsanwälte**
  **Sonnenstrasse 33**
  **80331 München (DE)**

(56) Entgegenhaltungen:
GB-A- 2 359 699        US-A1- 2003 063 589
US-A1- 2003 130 793    US-A1- 2006 052 115

EP 2 098 088 B1

**Beschreibung**

Die Erfindung betrifft ein Verfahren und eine Vorrichtung zur verbesserten Bestimmung der Position eines Endgeräts in einem Mobilfunknetz.

Die Möglichkeit zur Bestimmung der Position von Endgeräten ist eine wichtige Eigenschaft moderner Mobilfunknetze. Endgeräte können dabei Mobiltelefone, insbesondere jedoch auch beliebige Rechner sein, die mit Vorrichtungen zum Senden und Empfangen in einem Mobilfunknetz ausgestattet sind. Verschiedene Positionsbestimmungsverfahren stehen zur Verfügung: Bei der einfachen Zell-Ortung wird die Position der Funkzelle bestimmt, in die ein Endgerät eingebucht ist. Die Genauigkeit hängt von Größe und Form der Funkzellen ab. Je kleiner die Funkzellen, desto genauer stimmen tatsächliche und ermittelte Position überein.

Beim so genannten TDOA-Verfahren (TDOA = Time Difference of Arrival) wird die Position eines Endgeräts in einem Mobilfunknetz anhand der Differenz der Ankunftszeiten eines von dem Endgerät ausgesendeten Signals bei einer Vielzahl von verschiedenen Empfängern bestimmt. Bei zwei Empfängern an bekannten Orten liegen die möglichen Senderpositionen auf einem Hyperboloid. Ist ein Dritter Empfänger vorhanden, liegen die möglichen Positionen auf einer Kurve, die aus der Schnittmenge von zwei Hyperboloiden gebildet wird. Eine exakte Positionsbestimmung erfordert mindestens vier Empfänger.

Ein Nachteil des TDOA-Verfahrens besteht jedoch in einer zu geringen Genauigkeit der Positionsbestimmung, deren mögliche Ursachen in der Geometrie der Empfänger und des Senders, in der Zeitmessung der Empfängersystems, der Synchronisation der Empfängersysteme oder in der Bandbreite der gesendeten Impulse liegen können.

Das so genannte E-OTD-Verfahren nutzt die bereits existierende GSM Infrastruktur, um die Position eines Endgeräts zu bestimmen. Die Position eines Endgeräts wird durch Triangulation über drei Basisstationen ermittelt, wobei die Auswertung auf der Zeitdifferenz beim Eintreffen von Funksignalen beim Endgerät (z.B. Handy) beruht. Diese Zeitdifferenzen werden entweder vom Endgerät ans Netzwerk zur Positionsbestimmung übertragen oder das Endgerät erhält vom Netzwerk zusätzliche Daten und berechnet damit seine Position selbst. Das Verfahren funktioniert auch innerhalb von Gebäuden, erreicht jedoch mit Abweichungen von bis zu 100m von der tatsächlichen Position nicht die Genauigkeit von GPS. Ferner müssen Endgeräte für E-OTD eigens adaptiert werden.

Ein Verfahren mit höherer Genauigkeit ist das sog. AGPS-Verfahren (Assisted GPS). Hierbei handelt es sich um ein Verfahren zur Übermittlung von Hilfsdaten über ein Mobilfunknetz zur einer schnelleren GPS-Positionsbestimmung. Anhand der Funkzelle, die das Mobiltelefon bedient, ist der ungefähre Aufenthaltsort des Mobiltelefons bereits bekannt. Dieser Ort kann durch Messungen der Signallaufzeiten von den anderen in der Nähe befindlichen Mobilfunkmasten weiter präzisiert werden. Der Empfang von mindestens drei Basisstationen ist erforderlich, um den Standort genau ausrechnen zu können. Werden nur zwei Basisstationen empfangen, kann der Standort nur auf zwei Positionen eingegrenzt werden.

Diese Informationen können verwendet werden, um den Suchbereich für die Satellitensignale (Identität der sichtbaren Satelliten, ungefähre Laufzeit, Dopplerverschiebung) einzuschränken und somit die Messung zu beschleunigen.

Beim konventionellen GPS hat der Empfänger zwei Aufgaben. Er misst die Ankunftszeit der Signale und er liest die von den Satelliten gesendeten Daten, die u. a. Bahnparameter und Fehlerkorrekturen enthalten. Beim A-GPS werden die Satellitendaten von Referenzempfängern gelesen, die stationär an Orten mit guter Sicht zum Himmel aufgestellt sind und deren exakte Positionsdaten bereits vermessen wurden. Der mobile Empfänger muss daher nur die Ankunftszeiten der Satellitensignale messen, wozu ein um bis zu 30 dB geringerer Pegel ausreicht.

In Abhängigkeit vom Ort, an dem die eigentliche Berechnung der Position stattfindet, unterscheidet man den netzwerkbasierten und den terminalbasierten Modus. Bei netzwerkbasiertem A-GPS sendet ein Endgerät die gemessenen Signallaufzeiten der jeweiligen Satellitensignale und ein Server im Mobilfunknetz berechnet daraus die genaue Position, die schließlich zurück an das Endgerät übermittelt wird. Die Hilfsdaten bestehen in diesem Falle nur aus den Suchraumparametern. Beim terminalbasierten Modus erhält das Endgerät lediglich die Satelliten- und Hilfs-Daten und berechnet seine Position nach der Messung selbst.

Ein Nachteil des AGPS-Verfahrens ist, dass es einen zusätzliche Kosten verursachenden Empfänger für das Signal der GPS-Satelliten im mobilen Endgerät erfordert. Ein weiterer Nachteil besteht darin, dass das GPS-Signal in Gebäuden nicht oder nur sehr schlecht empfangen wird.

Dokument GB2359699 A zeigt eine Methode die absolute Position von Mobilgeräten zu bestimmen: Drei Basisstationen (BTS) des Mobilfunksystems haben bekannte Koordinaten. In der Reichweite sämtlicher Basisstationen befindet sich ein erstes mobiles Endgerät, welches satellitengestützt seine Lage bestimmen kann. Ein zweites mobiles Endgerät unterscheidet sich von dem Ersten, dadurch dass es seine Lage nicht bestimmen kann, indem es auf den Satellit zugreift. Deswegen muss ein anderes Verfahren zur Bestimmung der Lage des zweiten Endgerätes gefunden werden. Dies geschieht indem die Lage der BTSn bestimmt wird durch ihre relative Lage zum ersten Endgerät. Die absolute Lage des zweiten Endgerätes wird nun bestimmt durch die Time Difference of Arrival (TDOAs) zu den BTSn, deren absolute Position durch das erste Endgerät satellitengestützt bekannt sind.

Dokument US2006/0052115 A1 beschreibt ein iteratives Verfahren um die Ortsbestimmung von mobilen Endgeräten durchzuführen. Zuerst wird eine erste Methode durchgeführt, um die Position zu bestimmen. Falls die Methode kein ausreichend genaues Ergebnis liefert, wird mindestens eine weitere Methode getestet. Eine Methode kann auch mehrfach durchgeführt werden, um die Genauigkeit zu steigern. Ferner wird auch eine Fehlerabschätzung ermöglicht. Es werden GPS-gestützte Verfahren diskutiert, sowie Time Difference Of Arrival (TDOA) und die Auswertung der Signalstärke an Basisstationen.

Aufgabe der vorliegenden Erfindung ist daher, ein Verfahren und ein System zur Positionierung von Endgeräten in einem Mobilfunknetz bereit zu stellen, dass eine verhältnismäßig präzise Positionierung auch dann ermöglicht, wenn für das Endgerät allein nur ein verhältnismäßig ungenaues Positionierungsverfahren zur Verfügung steht. Aufgabe der vorliegenden Erfindung ist insbesondere, die genaue Positionsbestimmung von Endgeräten in einem Gebäude zu ermöglichen, in dem beispielsweise die Nutzung von AGPS nicht möglich ist.

Diese Aufgabe wird gemäß der Erfindung gelöst durch ein Verfahren zur Bestimmung der Position eines Endgeräts in einem Mobilfunknetz gemäß dem unabhängigen Anspruch 1, eine entsprechende auf einem Computer auszuführende Software gemäß Anspruch 6 und ein entsprechendes System gemäß dem unabhängigen Anspruch 8. Vorteilhafte Ausführungsformen werden durch die Unteransprüche definiert.

Ausführungsformen und Beispiele der folgenden Beschreibung, welche nicht durch die Ansprüche abgedeckt sind, sind nicht als Teil dieser Erfindung anzusehen. In einer Ausführungsform der Erfindung umfasst das Verfahren zur Bestimmung der absoluten Position eines ersten Endgeräts in einem Mobilfunknetzwerk das Bestimmen einer absoluten Position eines zweiten Endgeräts mit einem ersten Positionsbestimmungsverfahren; das Bestimmen einer relativen Position des ersten Endgeräts zu dem zweiten Endgerät mit einem zweiten Positionsbestimmungsverfahren; sowie das Bestimmen der absoluten Position des ersten Endgeräts basierend auf der absoluten Position des zweiten Endgeräts und der relativen Position des Endgeräts zu dem zweiten Endgerät. Das erste und das zweite Positionsbestimmungsverfahren sind unterschiedliche Verfahren.

Das Bestimmen der relativen Position des ersten Endgeräts zu dem zweiten Endgerät kann in einer weiteren Ausführungsform das Bestimmen einer ersten absoluten Hilfsposition des ersten Endgerätes mit dem zweiten Positionsbestimmungsverfahren; das Bestimmen einer zweiten absoluten Hilfsposition des zweiten Endgeräts mit dem zweiten Positionsbestimmungsverfahren; sowie das Bestimmen der relativen Position, basierend auf der ersten absoluten Hilfsposition des ersten Endgerätes und der zweiten absoluten Hilfsposition des zweiten Endgeräts beinhalten.

In einer weiteren Ausführungsform kann das erste Positionsbestimmungsverfahren eine präzisere Bestimmung der absoluten Position erlauben als das zweite Positionsbestimmungsverfahren. Als erstes Positionsbestimmungsverfahren kann das AGPS-Verfahren verwendet werden. Als zweites Positionsbestimmungsverfahren kann das TDOA-Verfahren verwendet werden.

In einer weiteren Ausführungsform kann das Verfahren zur Bestimmung der absoluten Position eines Endgeräts in einem Mobilfunknetzwerk ferner das Prüfen umfassen, ob die absolute Position des Endgeräts mit einem ersten Verfahren bestimmt werden kann. Wenn ja, kann die absolute Position des Endgeräts mit dem ersten Positionsbestimmungsverfahren bestimmt werden. Das Verfahren kann periodisch wiederholt werden. Das Verfahren kann ferner auch nur auf Anforderung durchgeführt werden.

In einer weiteren Ausführungsform kann ein Verfahren zur Bestimmung der Position eines Endgerätes in einem Mobilfunknetzwerk ferner die Durchführung der obigen Schritte zur Bestimmung einer Vielzahl (n) von Positionen des Endgerätes für eine Vielzahl (n) von zweiten Endgeräten sowie das Bestimmen der Position des Endgerätes, basierend auf der Vielzahl (n) von Positionen beinhalten.

Ein System zur Bestimmung der absoluten Position eines Endgeräts in einem Mobilfunknetzwerk kann Mittel zum Bestimmen einer absoluten Position eines zweiten Endgeräts mit einem ersten Positionsbestimmungsverfahren; Mittel zum Bestimmen einer relativen Position des ersten Endgeräts zu dem zweiten Endgerät mit einem zweiten Positionsbestimmungsverfahren; sowie Mittel zum Bestimmen der absoluten Position des ersten Endgeräts basierend auf der absoluten Position des zweiten Endgeräts und der relativen Position des Endgeräts zu dem zweiten Endgerät umfassen, wobei das erste und das zweite Positionsbestimmungsverfahren unterschiedliche Verfahren sind.

Diese und weitere Aspekte, Eigenschaften und Vorteile der vorliegenden Erfindung werden in der folgenden detaillierten Beschreibung von Ausführungsbeispielen dargestellt werden, unter Bezugnahme auf die anliegende Zeichnung, in welcher

Fig. 1     die schematische Darstellung einer Situation zeigt, in welcher ein Verfahren gemäß einer Ausführungsform der Erfindung verwendet werden kann;

Fig. 2     ein Flussdiagramm eines Verfahrens gemäß einer Ausführungsform der Erfindung darstellt;

Fig. 3     ein Flussdiagramm eines Verfahrens gemäß einer weiteren Ausführungsform der Erfindung darstellt;

Fig. 4     die schematische Darstellung einer Situation mit mehreren benachbarten Geräten zeigt, in welcher in Verfahren gemäß einer weiteren Ausführungsform der Erfindung verwendet werden kann;

Fig. 5 ein Flussdiagram eines Verfahrens gemäß einer weiteren Ausführungsform der Erfindung darstellt.

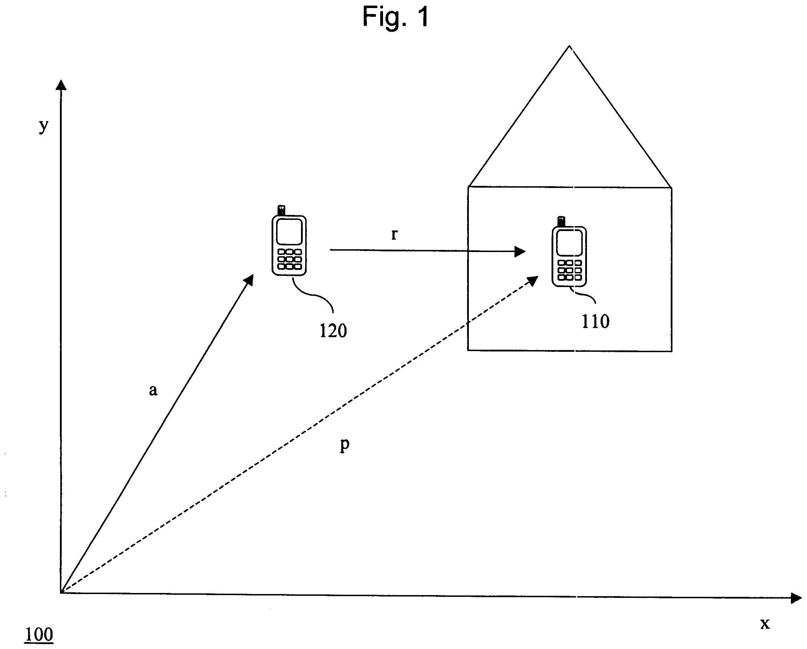

Fig. 1 ist eine schematische Darstellung einer Situation, in welcher ein Endgerät 110 sich in einem Gebäude befindet. Das Gebäude schirmt das Endgerät 110 derart ab, dass Signale eines Satellitennavigationssystems durch das Endgerät 110 nicht oder nur unzureichend empfangen werden können. Demgegenüber wird das benachbarte Endgerät 120 nicht abgeschirmt, so dass dieses seinerseits Signale des Satellitennavigationssystems zur Positionsbestimmung verwenden kann.

Die wesentliche Idee der Erfindung besteht nun darin, die Positionsbestimmung des benachbarten Endgeräts 120 in die Positionsbestimmung des Endgeräts 110 mit einzubeziehen, um auf diese Weise die Genauigkeit der Positionsbestimmung des Endgeräts 110 zu erhöhen.

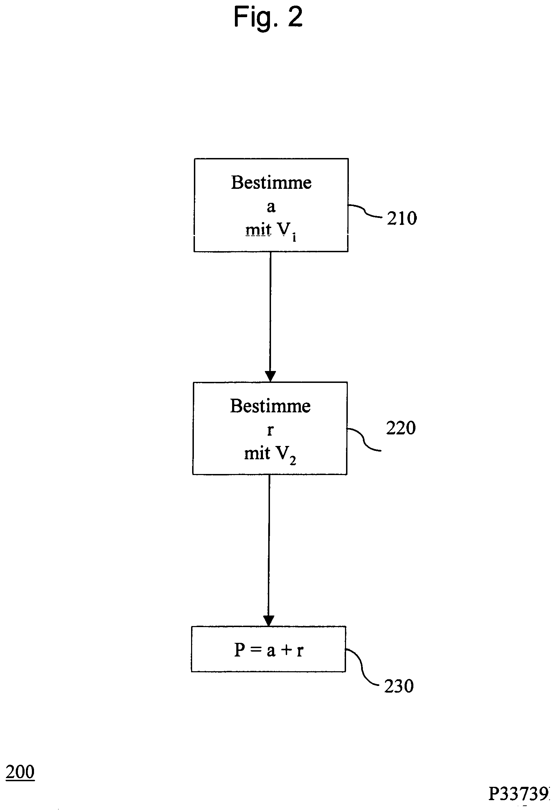

Fig. 2 zeigt ein Flussdiagramm eines Verfahrens 200 zur Bestimmung der absoluten Position eines Endgeräts in einem Mobilfunknetz gemäß einer Ausführungsform der Erfindung.

Es sei angenommen, dass eine Situation vorliegt, wie sie im Zusammenhang mit Fig. 1 beschrieben wurde.

In Schritt 210 wird eine erste absolute Position des Endgeräts 120 mit einem ersten Positionsbestimmungsverfahren gemessen. Das erste Positionsbestimmungsverfahren kann auf einem Satellitennavigationssystem basieren. Es wird angenommen, dass das Endgerät 120 fähig ist, Signale des Satellitennavigationssystems zu empfangen und im Sinne einer Positionsbestimmung zu verarbeiten. Als Satellitennavigationssystem kann das GPS-System verwendet werden. Alternativ kann das GALILEO-System oder ein hybrides System verwendet werden. Bei dem ersten Positionsbestimmungsverfahren kann es sich um das sog. AGPS-Verfahren (Assisted-GPS, vgl. Einführung) handeln.

In Schritt 220 wird eine relative Position des ersten Endgeräts zu dem zweiten Endgerät mit einem zweiten Positionsbestimmungsverfahren bestimmt. Dabei kann in einer Ausführungsform der Erfindung ein Vektor bestimmt werden, der die Position des zweiten Endgeräts angibt, relativ zu der Position des ersten Endgeräts als Koordinatenursprung, jeweils gemessen mit dem zweiten Positionsbestimmungsverfahren. Es wird angenommen, dass das zweite Positionsbestimmungsverfahren sowohl für das erste als auch für das zweite Endgerät durchgeführt werden kann, unbeschadet der Tatsache, dass sich das erste Endgerät in einem Gebäude befindet. In einer Ausführungsform der Erfindung besitzt das zweite Positionsbestimmungsverfahren eine geringere Präzision als das erste Positionsbestimmungsverfahren. Als zweites Positionsbestimmungsverfahren kann das TDOA-Verfahren verwendet werden.

In Schritt 230 wird die absolute Position des ersten Endgeräts basierend auf der absoluten Position des zweiten Endgeräts und der relativen Position des ersten Endgeräts zu dem zweiten Endgerät bestimmt.

In einer Ausführungsform der Erfindung kann die relative Position des ersten Endgeräts zu dem zweiten Endgerät dadurch bestimmt werden, dass eine erste absolute Hilfsposition des ersten Endgeräts und eine zweite absolute Hilfsposition des zweiten Endgeräts mit dem zweiten Positionsbestimmungsverfahren bestimmt werden. Die relative Position des ersten Endgeräts zu dem zweiten Endgerät ergibt sich dann als die Differenz der beiden Hilfspositionen. Die absolute Position des ersten Endgeräts kann dann als Summe der absoluten Position des zweiten Endgeräts und der relativen Position ermittelt werden. In Vektorschreibweise:

$$\vec{a} = \vec{p} + (\vec{r_2} - \vec{r_1})$$

Weitere Ausführungsformen der Erfindung beinhalten eine Wiederholung der Positionsbestimmung gemäß den Schritten 210 bis 230 in regelmäßigen Zeitabständen oder die Durchführung der Schritte 210 bis 230 nur auf eine bestimmte Anforderung hin.

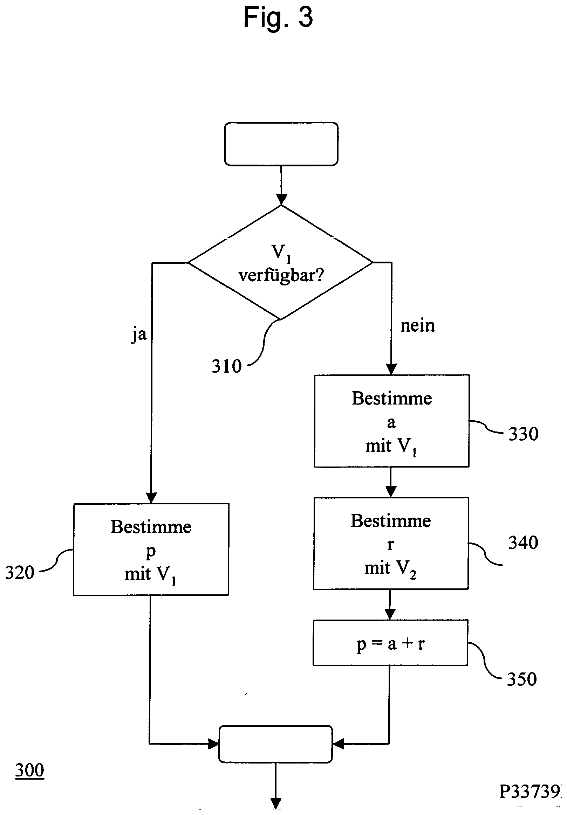

Fig. 3 zeigt ein Flussdiagramm für ein Verfahren zur Bestimmung der absoluten Position eines Endgeräts in einem Mobilfunknetz gemäß einer weiteren Ausführungsform der Erfindung. Es wird angenommen, dass das erste Positionsbestimmungsverfahren präziser arbeitet als das zweite Positionsbestimmungsverfahren. Auf das im Zusammenhang mit Figur 2 beschriebene Verfahren muss nur zurückgegriffen werden, wenn sich für das fragliche Endgerät 110 keine bessere Möglichkeit der Positionsbestimmung bietet.

In Schritt 310 wird daher vor Anwendung des ersten und zweiten Positionsbestimmungsverfahrens geprüft, ob das erste Positionsbestimmungsverfahren zur Bestimmung des Position des Endgerätes 110 zur Verfügung steht. Wenn dies der Fall ist, wird das erste Positionsbestimmungsverfahren in Schritt 320 verwendet, um die Position des Endgeräts 110 zu bestimmen.

Nur wenn das erste Positionsbestimmungsverfahren für das Endgerät 110 nicht zur Verfügung steht, wird in den Schritten 330, 340 und 350 das im Zusammenhang mit Fig. 2 beschriebene Verfahren durchgeführt. Diese Vorgehensweise hat den Vorteil, dass die Durchführung eines aufwendigeren Verfahrens erspart bleibt, wenn eine präzise Positionsbestimmung auch anderweitig durchführbar ist.

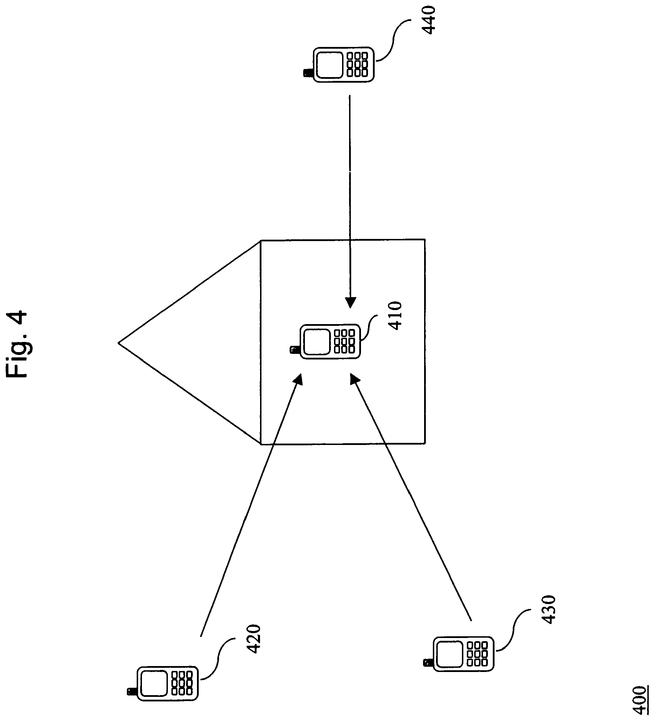

Fig. 4 ist eine Darstellung einer weiteren Situation, in welcher ein Endgerät 410 sich ähnlich zur der Situation in Figur 1 in einem Gebäude befindet, wobei nun mehrere zweite Endgeräte 420, 430 und 440 zu einer Positionsbestimmung gemäß der Erfindung zur Verfügung stehen.

Im Folgenden wird beschrieben, wie das im Zusammenhang mit Fig. 2 dargestellte Verfahren in der in Fig. 4 gezeigten Situation weiter verbessert werden kann. Dabei wird wieder vorausgesetzt, dass für das Endgerät 410 selbst nicht das erste Positionsbestimmungsverfahren sondern lediglich das zweite zur Verfügung steht.

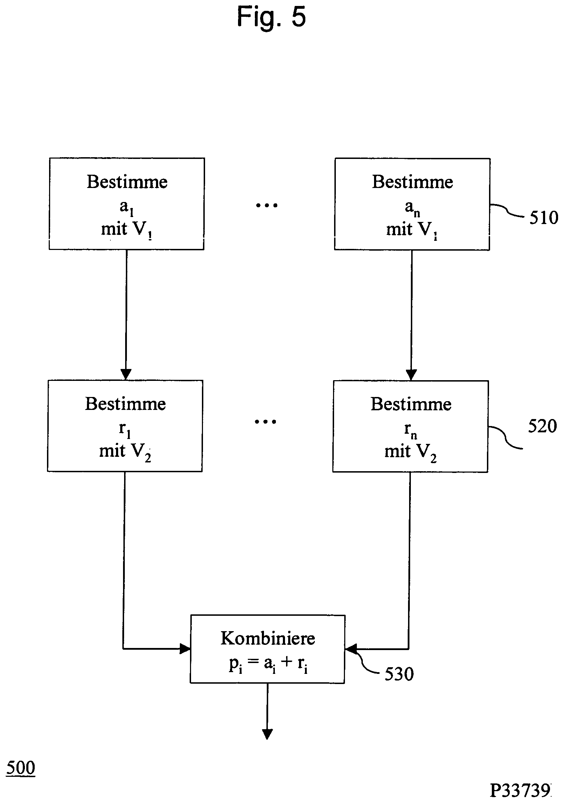

Fig. 5 zeigt ein Flussdiagramm für ein Verfahren zur Bestimmung der absoluten Position eines Endgeräts in einem Mobilfunknetz gemäß einer weiteren Ausführungsform der Erfindung, bei welchem das Vorhandensein mehrerer benachbarter zweiter Endgeräte berücksichtigt wird. Im Folgenden sei die Anzahl der benachbarten zweiten Endgeräte n.

In Schritt 510 werden mit dem ersten Positionsbestimmungsverfahren für jedes benachbarte zweite Endgerät 520, 530, etc absolute Positionen $a_i$ bestimmt, wobei i = 1, ..., n. In Schritt 520 werden dann mit dem zweiten Positionsbestimmungsverfahren für jedes benachbarte zweite Endgerät 520, 530, etc relative Positionen $r_i$ des ersten Endgeräts 510 zu den jeweiligen zweiten Endgeräten bestimmt.

In Schritt 530 ergeben sich aus den gesammelten absoluten und relativen Positionen $a_i$ und $r_i$ n Positionen $p_i$ des Endgeräts 510 gemäß der im Zusammenhang mit Fig. 2 angegebenen Formel, die z.T. identisch, z.T aber auch verschieden sein können. Die Bestimmung der endgültigen Position p kann dann durch Auswahl und/oder Kombination der $p_i$ erfolgen.

Beispielsweise kann als endgültige Position p diejenige Position festgelegt werden, welche die Summe der quadrierten Abstände zu den einzelnen $p_i$ minimiert:

$$p = \min_{p} \sum_{i=1}^{n} (p_i - p)^2$$

Die vorgestellte Erfindung hat den Vorteil, dass die Position eines Endgeräts in einem Mobilfunksystem auch dann ermöglicht wird, wenn für das Endgerät allein nur ein verhältnismäßig ungenaues Positionierungsverfahren zur Verfügung steht. Ein Vorteil der vorliegenden Erfindung ist insbesondere, die genaue Positionsbestimmung von Endgeräten in einem Gebäude zu ermöglichen, in dem beispielsweise die Nutzung von AGPS nicht möglich ist.

**Patentansprüche**

1. Verfahren zur Bestimmung der absoluten Position eines ersten Endgeräts (410) in einem Mobilfunknetzwerk, umfassend die Schritte:

- Bestimmen einer absoluten Position zumindest eines zweiten Endgeräts (420, 430, 440) mit einem ersten direkt satellitengestützten Positionsbestimmungsverfahren;
- Bestimmen einer relativen Position des ersten Endgeräts (410) zu dem zweiten Endgerät (420, 430, 440) mit einem zweiten Positionsbestimmungsverfahren;
- Bestimmen der absoluten Position des ersten Endgeräts (410) basierend auf der absoluten Position des zweiten Endgeräts (420, 430, 440) und der relativen Position des ersten Endgeräts (410) zu dem zweiten Endgerät (420, 430, 440),

wobei das erste und das zweite Positionsbestimmungsverfahren unterschiedliche Verfahren sind, **gekennzeichnet dadurch, dass** die oben genannten Verfahrensschritte zur Bestimmung einer Vielzahl von Positionen des ersten Endgerätes (410) für eine Vielzahl - n - von zweiten Endgeräten (420, 430, 440) verwendet werden, und dass die Position des ersten Endgerätes (410) basierend auf der Vielzahl - n - von Positionen der zweiten Endgeräte (420, 430, 440) bestimmt wird, wobei als endgültige Position des ersten Endgeräts (410) diejenige Position festgelegt wird, welche die Summe der quadrierten Abstände zu den einzelnen der Vielzahl - n - der bestimmten Positionen, die auf entsprechenden absoluten und relativen Positionen basieren, minimiert, wobei die absoluten Positionen mit dem ersten Positionsbestimmungsverfahren für jedes benachbarte zweite Endgerät (420, 430, 440) bestimmt werden, und wobei die relativen Positionen des ersten Endgeräts (410) zu den jeweiligen zweiten Endgeräten (420, 430, 440) für jedes zweite benachbarte Endgerät (420, 430, 440) mit dem zweiten Positionsbestimmungsverfahren bestimmt werden.

2. Verfahren gemäß Anspruch 1, wobei das Bestimmen der relativen Position des ersten Endgeräts (410) zu dem zweiten Endgerät (420, 430, 440) beinhaltet:

- Bestimmen einer ersten absoluten Hilfsposition des ersten Endgerätes (410) mit dem zweiten Positionsbestimmungsverfahren;
- Bestimmen einer zweiten absoluten Hilfsposition des zweiten Endgeräts (420, 430, 440) mit dem zweiten Positionsbestimmungsverfahren;
- Bestimmen der relativen Position, basierend auf der ersten absoluten Hilfsposition des ersten Endgerätes (410) und der zweiten absoluten Hilfsposition des zweiten Endgeräts (420, 430, 440).

3. Verfahren gemäß Anspruch 1 oder 2, wobei das erste Positionsbestimmungsverfahren eine präzisere Bestimmung der absoluten Position erlaubt als das zweite Positionsbestimmungsverfahren.

**4.** Verfahren gemäß Anspruch 3, wobei als erstes Positionsbestimmungsverfahren das AGPS-Verfahren verwendet wird.

**5.** Verfahren gemäß Anspruch 3 oder 4, wobei als zweites Positionsbestimmungsverfahren das TDOA-Verfahren verwendet wird.

**6.** Software zur Bestimmung der absoluten Position eines Endgeräts in einem Mobilfunknetzwerk, welche, ausgeführt durch einem Computer, ein Verfahren gemäß einem der Ansprüche 1 bis 5 durchführt.

**7.** Datenträger, auf dem eine Software gemäß Anspruch 6 gespeichert ist.

**8.** System zur Bestimmung der absoluten Position eines ersten Endgeräts (410) in einem Mobilfunknetzwerk, umfassend:

- Mittel zum direkt Bestimmen einer absoluten Position zumindest eines zweiten Endgeräts (420, 430, 440) mit einem ersten satellitengestützten Positionsbestimmungsverfahren;
- Mittel zum Bestimmen einer relativen Position des ersten Endgeräts (410) zu dem zweiten Endgerät (420, 430, 440) mit einem zweiten Positionsbestimmungsverfahren;
- Mittel zum Bestimmen der absoluten Position des ersten Endgeräts (410) basierend auf der absoluten Position des zweiten Endgeräts (420, 430, 440) und der relativen Position des ersten Endgeräts (410) zu dem zweiten Endgerät (420, 430, 440),

wobei das erste und das zweite Positionsbestimmungsverfahren unterschiedliche Verfahren sind, **gekennzeichnet dadurch, dass** eine Vielzahl - n - von Positionen des ersten Endgerätes (410) für eine Vielzahl - n - von zweiten Endgeräten (420, 430, 440) bestimmt ist, und dass die Position des ersten Endgerätes (410) basierend auf der Vielzahl - n - von Positionen der zweiten Endgeräte (420, 430, 440) bestimmt ist, wobei als endgültige Position des ersten Endgeräts (410) diejenige Position festgelegt ist, welche die Summe der quadrierten Abstände zu den einzelnen der Vielzahl - n - der bestimmten Positionen, die auf entsprechenden absoluten und relativen Positionen basieren, minimiert, wobei die absoluten Positionen mit dem ersten Positionsbestimmungsverfahren für jedes benachbarte zweite Endgerät (420, 430, 440) bestimmt werden, und wobei die relativen Positionen des ersten Endgeräts (410) zu den jeweiligen zweiten Endgeräten (420, 430, 440) für jedes zweite benachbarte Endgerät (420, 430, 440) mit dem zweiten Positionsbestimmungsverfahren bestimmt werden.

**Claims**

**1.** Method for determining the absolute position of a first terminal unit (410) in a mobile radio network, comprising the following steps:

- determination of an absolute position of at least one second terminal unit (420, 430, 440) with a first direct satellite-based position determining method;
- determination of a relative position of the first terminal unit (410) with respect to the second terminal unit (420, 430, 440) with a second position determining method;
- determination of the absolute position of the first terminal unit (410) based on the absolute position of the second terminal unit (420, 430, 440) and the relative position of the first terminal unit (410) with respect to the second terminal unit (420, 430, 440),

wherein the first and the second position determining methods are different methods, **characterised in that** the above named method steps are used for determining a multiplicity - n - of positions of the first terminal unit (410) for a multiplicity - n - of second terminal units (420, 430, 440), and **in that** the position of the first terminal unit (410) is determined based on the multiplicity - n - of positions of the second terminal units (420, 430, 440), wherein the definitive position of the first terminal unit (410) is established as the position which minimises the sum of the squares of the distances to the individual positions of the multiplicity - n - of the determined positions which are based on corresponding absolute and relative positions, wherein the absolute positions are determined for each adjacent second terminal unit (420, 430, 440) with the first position determining method, and wherein the relative positions of the first terminal unit (410) with respect to the respective second terminal units (420, 430, 440) are determined for each second adjacent terminal unit (420, 430, 440) with the second position determining method.

**2.** Method according to claim 1, wherein the determination of the relative position of the first terminal unit (410) with respect to the second terminal unit (420, 430, 440) comprises:

- determination of a first absolute auxiliary position of the first terminal unit (410) with the second position determining method;
- determination of a second absolute auxiliary position of the second terminal unit (420, 430, 440) with the second position determining method;

- determination of the relative position, based on the first absolute auxiliary position of the first terminal unit (410) and the second absolute auxiliary position of the second terminal unit (420, 430, 440).

**3.** Method according to claim 1 or 2, wherein the first position determining method allows more precise determination of the absolute position than the second position determining method.

**4.** Method according to claim 3, wherein the AGPS method is used as the first position determining method.

**5.** Method according to claim 3 or 4, wherein the TDOA method is used as the second position determining method.

**6.** Software for determining the absolute position of a terminal unit in a mobile radio network, which, implemented by a computer, implements a method according to one of claims 1 to 5.

**7.** Data storage medium on which software according to claim 6 is stored.

**8.** System for determining the absolute position of a first terminal unit (410) in a mobile radio network, comprising:

- means for direct determination of an absolute position of at least one second terminal unit (420, 430, 440) with a first satellite-based position determining method;
- means for determination of a relative position of the first terminal unit (410) with respect to the second terminal unit (420, 430, 440) with a second position determining method;
- means for determination of the absolute position of the first terminal unit (410) based on the absolute position of the second terminal unit (420, 430, 440) and the relative position of the first terminal unit (410) with respect to the second terminal unit (420, 430, 440), wherein the first and the second position determining methods are different methods,

**characterised in that**
a multiplicity - n - of positions of the first terminal unit (410) are determined for a multiplicity - n - of second terminal units (420, 430, 440), and **in that** the position of the first terminal unit (410) is determined based on the multiplicity - n - of positions of the second terminal units (420, 430, 440),
wherein the definitive position of the first terminal unit (410) is established as the position which minimises the sum of the squares of the distances to the individual positions of the multiplicity - n - of the determined positions which are based on corresponding absolute and relative positions,
wherein the absolute positions are determined for each adjacent second terminal unit (420, 430, 440) with the first position determining method, and wherein the relative positions of the first terminal unit (410) with respect to the respective second terminal units (420, 430, 440) are determined for each second adjacent terminal unit (420, 430, 440) with the second position determining method.

**Revendications**

**1.** Procédé de détermination de la position absolue d'un premier terminal (410) dans un réseau de radiotéléphonie mobile, comprenant les étapes :

- de détermination d'une position absolue d'au moins un deuxième terminal (420, 430, 440) au moyen d'un premier procédé de détermination de position directe par satellite ;
- de détermination d'une position relative du premier terminal (410) par rapport au deuxième terminal (420, 430, 440) au moyen d'un deuxième procédé de détermination de position ;
- de détermination de la position absolue du premier terminal (410) sur la base de la position absolue du deuxième terminal (420, 430, 440) et de la position relative du premier terminal (410) par rapport au deuxième terminal (420, 430, 440),

dans lequel le premier et le deuxième procédé de détermination de position sont des procédés différents,
**caractérisé en ce que**
les étapes de procédé citées ci-dessus sont utilisées pour déterminer une pluralité -n- de positions du premier terminal (410) pour une pluralité -n- de deuxièmes terminaux (420, 430, 440), et **en ce que** la position du premier terminal (410) est déterminée sur la base de la pluralité -n- de positions des deuxièmes terminaux (420, 430, 440),
dans lequel la position qui réduit au minimum la somme des écarts élevés au carré par rapport aux différentes positions de la pluralité -n- des positions déterminées, qui se basent sur des positions absolues et relatives correspondantes, est établie comme position finale du premier terminal (410),
dans lequel les positions absolues sont déterminées pour chaque deuxième terminal (420, 430, 440) voisin au moyen du premier procédé de détermination de position, et
dans lequel les positions relatives du premier terminal (410) par rapport aux deuxièmes terminaux (420, 430, 440) respectifs pour chaque deuxième terminal (420, 430, 440) voisin sont déterminées au moyen du deuxième procédé de détermination de position.

2. Procédé selon la revendication 1, dans lequel la détermination de la position relative du premier terminal (410) par rapport au deuxième terminal (420, 430, 440) comporte :

   - la détermination d'une première position auxiliaire absolue du premier terminal (410) au moyen du deuxième procédé de détermination de position ;
   - la détermination d'une deuxième position auxiliaire absolue du deuxième terminal (420, 430, 440) au moyen du deuxième procédé de détermination de position ;
   - la détermination de la position relative, sur la base de la première position auxiliaire absolue du premier terminal (410) et de la deuxième position auxiliaire absolue du deuxième terminal (420, 430, 440).

3. Procédé selon la revendication 1 ou 2, dans lequel le premier procédé de détermination de position permet une détermination de la position absolue plus précise qu'avec le deuxième procédé de détermination de position.

4. Procédé selon la revendication 3, dans lequel le procédé AGPS- est utilisé comme premier procédé de détermination de position.

5. Procédé selon la revendication 3 ou 4, dans lequel le procédé TDOA est utilisé comme deuxième procédé de détermination de position.

6. Logiciel de détermination de la position absolue d'un terminal dans un réseau de radiotéléphonie mobile, lequel, exécuté par un ordinateur, met en oeuvre un procédé selon l'une quelconque des revendications 1 à 5.

7. Support de données, sur lequel un logiciel selon la revendication 6 est mis en mémoire.

8. Système de détermination de la position absolue d'un premier terminal (410) dans un réseau de radiotéléphonie mobile, comprenant :

   - des moyens de détermination directe d'une position absolue d'au moins un deuxième terminal (420, 430, 440) au moyen d'un premier procédé de détermination de position par satellite ;
   - des moyens de détermination d'une position relative du premier terminal (410) par rapport au deuxième terminal (420, 430, 440) au moyen d'un deuxième procédé de détermination de position ;

   - des moyens de détermination de la position absolue du premier terminal (410) sur la base de la position absolue du deuxième terminal (420, 430, 440) et de la position relative du premier terminal (410) par rapport au deuxième terminal (420, 430, 440),

dans lequel le premier et le deuxième procédé de détermination de position sont des procédés différents,

**caractérisé en ce que**

une pluralité -n- de positions du premier terminal (410) est déterminée pour une pluralité -n- de deuxièmes terminaux (420, 430, 440), et **en ce que** la position du premier terminal (410) est déterminée sur la base de la pluralité -n- de positions des deuxièmes terminaux (420, 430, 440),

dans lequel la position qui réduit au minimum la somme des écarts élevés au carré par rapport aux différentes positions de la pluralité -n- des positions déterminées, qui se basent sur des positions absolues et relatives correspondantes, est établie comme position finale du premier terminal (410)

dans lequel les positions absolues sont déterminées au moyen du premier procédé de détermination de position pour chaque deuxième terminal (420, 430, 440) voisin, et

dans lequel les positions relatives du premier terminal (410) par rapport aux deuxièmes terminaux (420, 430, 440) respectifs pour chaque deuxième terminal (420, 430, 440) voisin sont déterminées au moyen du deuxième procédé de détermination de position.

Fig. 1

# Fig. 2

```
┌─────────────────┐
│    Bestimme     │
│       a         │  ⌐ 210
│    mit V_i       │
└─────────────────┘
         │
         ▼
┌─────────────────┐
│    Bestimme     │
│       r         │  ⌐ 220
│    mit V_2       │
└─────────────────┘
         │
         ▼
   ┌─────────────┐
   │  P = a + r  │
   └─────────────┘
              ⌐ 230
```

200

P33739

# Fig. 3

300

P33739

# Fig. 4

420

410

430

440

400

# Fig. 5

```
┌─────────────┐           ┌─────────────┐
│  Bestimme   │           │  Bestimme   │
│     a₁      │    • • •   │     aₙ      │ ⟋ 510
│   mit V₁    │           │   mit Vᵢ    │
└─────────────┘           └─────────────┘
        │                         │
        ▼                         ▼
┌─────────────┐           ┌─────────────┐
│  Bestimme   │           │  Bestimme   │
│     r₁      │    • • •   │     rₙ      │ ⟋ 520
│   mit V₂    │           │   mit V₂    │
└─────────────┘           └─────────────┘
        │                         │
        │     ┌─────────────┐     │
        └────▶│  Kombiniere │◀────┘
              │ pᵢ = aᵢ + rᵢ │ ⟋ 530
              └─────────────┘
                     │
                     ▼
```

500

P33739

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2359699 A
- US 20060052115 A1